(19)

Europäisches
Patentamt
European
Patent Office
Office européen
des brevets

(11)  **EP 2 892 026 A1**

(12)  **EUROPEAN PATENT APPLICATION**
published in accordance with Art. 153(4) EPC

(43) Date of publication:
**08.07.2015 Bulletin 2015/28**

(51) Int Cl.:
**G06T 7/00** (2006.01)      **G06T 1/00** (2006.01)

(21) Application number: **12883712.7**

(22) Date of filing: **28.08.2012**

(86) International application number:
**PCT/JP2012/071724**

(87) International publication number:
**WO 2014/033842 (06.03.2014 Gazette 2014/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Hitachi, Ltd.**
**Tokyo 100-8280 (JP)**

(72) Inventors:
  • **MIURA Naoto**
    **Tokyo 100-8280 (JP)**

  • **KIYOMIZU Harumi**
    **Tokyo 100-8280 (JP)**
  • **NAGASAKA Akio**
    **Tokyo 100-8280 (JP)**
  • **MIYATAKE Takafumi**
    **Tokyo 100-8280 (JP)**
  • **MATSUDA Yusuke**
    **Tokyo 100-8280 (JP)**

(74) Representative: **Moore, Graeme Patrick**
    **Mewburn Ellis LLP**
    **City Tower**
    **40 Basinghall Street**
    **London EC2V 5DE (GB)**

(54)  **AUTHENTICATION DEVICE AND AUTHENTICATION METHOD**

(57)      An authentication device that authenticates an individual by using features of a biological object includes an input device 2 to place the biological object thereon, a plurality of image capture devices 9 that capture the biological object, an authentication processing unit 10 that processes images captured by the plurality of image capture devices, a plurality of light sources 3 to capture the features of the biological object and the biological object, and a storage device 14 that stores first feature data registered in advance. The authentication processing unit 10 includes a checking processing unit that checks second feature data representing the features of the biological object captured by the image capture devices with each of the first feature data and a biological position/shape detection unit that detects position/shape information of finger such as flexure, floating, bending, and the like of finger, and the plurality of light sources are arranged in a front part, a lower part, and a side part of the device with respect to the biological object, and, on the basis of a detection result obtained by the biological position/shape detection unit, controls on/off states of the plurality of light sources to switch feature values used in authentication.

FIG.1

**Description**

Technical Field

The present invention relates to an authentication system that authenticates an individual by using a biological object and, more specifically, to an accurate authentication technique excellent in convenience.

Background Art

Of various biological authentication techniques, a finger vein authentication is known as one which achieves accurate authentication. The finger vein authentication achieves excellent authentication accuracy because a vessel pattern in a finger is used, and forgery and falsification are difficult more than those in fingerprint authentication, so as to achieve high security.

In recent years, cases in which biological authentication devices are mounted on a notebook PC (Personal Computer), a mobile terminal such as a PDA (Personal Digital Assistant), a locker, a cashbox, and a machine such as a printer to assure the securities of the machines increase in number. As fields to which biological authentication is applied, in addition to an entering and leaving management, a presence/absence management, and login to a computer, in resent years, biological authentication begins to be used in settlement or the like. In particular, a biological authentication device used in a public institution requires not only achievement of reliable personal authentication but also an increase in throughput of the device. The throughput of the device is influenced by not only an authentication speed and the number of times of retry caused by an error, but also an operation time of a user. For this reason, it is important to provide an authentication device which has high authentication accuracy and can be easily operated by anybody. As conditions for the authentication device which can be easily operated and is good in convenience, a condition in which the usage of the device is easily viscerally understood and a condition in which the way of placing a biological object is slightly restricted are given.

As a technique related to improvement of convenience in the authentication device which performs personal authentication on the basis of the shapes of veins, Patent Document 1 is given.

As a conventional technique of fingerprint authentication which can cope with a change of a position of a finger by accurately calculating a misalignment of the finger, Patent Literature 2 is disclosed.

As a conventional technique which captures two images of transmitted light and reflected light and corrects one image on the basis of the state of the other image to improve the accuracy, Patent Literature 3 is disclosed.

Citation List

Patent Literature

    PTL 1: Japanese Patent Application Laid-Open No. 2011-194245
    PTL 2: Japanese Patent Application Laid-Open No. 2008-198083
    PTL 3: Japanese Patent Application Laid-Open No. 2004-255212

Summary of Invention

Technical Problem

In order to achieve a convenient accurate personal authentication device, the feature of a biological object which has a high degree of freedom when the biological object is presented and includes a large number of pieces of information characterizing an individual must be used. In order to increase the degree of freedom for presenting a biological object, it is important to make a place where the biological object is presented visibly and tactually understandable and secure a large area for the place. In particular, when the biological object is a finger, even in a state in which a finger joint is bent, a finger joint is warped to the opposite side, or a fingertip or the base side of a finger is floated from a device, correct authentication must be performed.

A finger vein authentication device described in Patent Literature 1 is openly designed to improve the convenience for a user to have a structure on which a finger can be easily placed. Furthermore, a finger pedestal is also installed to prevent a finger position from being misaligned. A dimple fitted on a normal finger thickness and a normal finger size is formed in the finger pedestal. A fingertip or a base of finger is placed on the dimple to suppress the finger from horizontally misaligned or longitudinally misaligned. For this reason, when a finger is correctly placed, the reproducibility of a biological object to be captured is improved. Thus, authentication accuracy can be improved. However, when a finger is not correctly placed, authentication accuracy is deteriorated. As a reason why a finger cannot be correctly placed, a finger cannot be correctly placed because the user does not know the usage of the device, or a finger cannot be correctly placed because the finger is not fitted on the finger pedestal although the user knows the usage. Furthermore, an operation of fitting and placing a finger on the finger pedestal may be inconvenient for some user. For example, a finger is not easily placed on the finger pedestal depending on a positional relationship between the device and the user. At this time, the user must move to a position where the user can easily place her/his finger. Alternatively, it is also assumed that the user forcibly places her/his finger. In a device in which both a fingertip and a base of finger must be brought into contact with the device, it may be difficult to bring the base side of finger into contact with the device depending on a relationship between an installation level of the device and the height of a user. For this reason, the user must unnecessarily bend down or stretch out her/his arm. In this manner, when a position on which a finger is placed is regulated, the convenience for a user may be deteriorated.

Patent Literature 2 discloses a fingerprint authentication device which accurately calculates a misalignment of a fingertip to increase the degree of freedom of a finger position. However, a transmitted light source to capture a fingerprint is installed above a position on which a finger is placed, and the position of the transmitted light source is fixed. For this reason, it is assumed that, when a finger is largely misaligned, the light source does not appropriately illuminate to make it impossible to clearly capture a fingerprint. With respect to the problem, Patent Literature 2 does not suggest and disclose a method of solving the problem.

Patent Literature 3 discloses a technique which illuminates with light sources on a biological object while switching two light sources of transmitted light and reflected light and removes unnecessary information of the other image on the basis of the state of one image to capture a high-definition vein image. However, with respect to a problem to cope with finger deformation such as switching between capturing methods or processing methods depending on states of a placed finger, a solving method is not suggested or disclosed.

In order to solve the above problem, it is an object of the present invention to provide an authentication device and an authentication method, each of which has a high degree of freedom when a biological object is presented, does not deteriorate the convenience for a user, copes with deformation or the like of the biological object, and uses biological information.

Solution to Problems

In order to achieve the object, according to the present invention, there is provided an authentication device that authenticates an individual by using features of a biological object, including an input device to place a biological object thereon, a plurality of image capture devices to capture the biological object, an image processing unit that processes images captured by the plurality of image capture devices, and a plurality of light sources to capture the biological object, wherein the image processing unit includes a checking processing unit that checks first feature data registered in advance with second feature data extracted from the images captured by the image capture devices and representing the features of the biological object, and a biological position/shape detection unit that detects a position/shape of the biological object by using the images captured by the plurality of image capture devices, on the basis of the position/shape of the biological object detected by the biological position/shape detection unit, on/off states of the plurality of light sources or capturing by the plurality of image capture devices are controlled to switch feature values of the biological object used in authentication depending on the position/shape of the biological object.

In order to achieve the object, according to the present invention, there is provided an authentication method that authenticates an individual by an image processing unit using features of a biological object, wherein, by using images obtained by capturing the biological object placed on an input device with a plurality of light sources and a plurality of image capture devices, position/shape of the placed biological object are detected, first feature data registered in advance is checked with second feature data extracted from the images and representing the features of the biological object to perform authentication, and the features of the biological object used in the authentication are switched depending on the detected position/shape of the biological object. Advantageous Effects of Invention

According to the present invention, there can be provided a convenient biological authentication device using a finger and having high authentication accuracy wherein even though a finger is misaligned, bent, flexed, or floated, authentication can be accurately performed.

Brief Description of Drawings

Figure 1 is a diagram showing an entire configuration of a biological authentication system according to a first embodiment.

Figure 2A is a diagram for explaining a device configuration of the biological authentication system according to the first embodiment.

Figure 2B is a diagram for explaining the device configuration of the biological authentication system according to the first embodiment.

Figure 3A is an explanatory diagram showing a principle of detecting a three-dimensional shape of a finger in the biological authentication system according to the first embodiment.

Figure 3B is an explanatory diagram showing a principle of detecting a three-dimensional shape of a finger in the biological authentication system according to the first embodiment.

Figure 4 is a flow chart showing a concrete example of an authentication process in the biological authentication system according to the first embodiment.

Figure 5A is a diagram for explaining a determining process for a three-dimensional shape of a finger in the biological authentication system according to the first embodiment.

Figure 5B is a diagram for explaining a determining process for a three-dimensional shape of a finger in the biological authentication system according to the first embodiment.

Figure 5C is a diagram for explaining a determining process for a three-dimensional shape of a finger in the biological authentication system according to the first embodiment.

Figure 6A is a diagram for explaining a principle of capturing a feature value of a finger on the back side of hand in the biological authentication system according to the first embodiment.

Figure 6B is a diagram for explaining a principle of capturing a feature value of a finger on the back side of hand in the biological authentication system according to the first embodiment.

Figure 6C is a diagram for explaining a principle of capturing a feature value of a finger on the back side of hand in the biological authentication system according to the first embodiment.

Figure 7 is a diagram showing an example of rotational correction of a finger in the biological authentication system according to the first embodiment.

Figure 8A is a diagram for explaining statistical properties of various biological features of a finger on a palm side of hand in the biological authentication system according to the first embodiment.

Figure 8B is a diagram for explaining statistical properties of various biological features of a finger on a back side of hand in the biological authentication system according to the first embodiment.

Figure 9 is a diagram for explaining an example of biological features used in flexure of a finger in the biological authentication system according to the first embodiment.

Figure 10 is a diagram for explaining learning of a change in statistical property caused by a change of a nail with time in the biological authentication system according to the first embodiment.

Figure 11A is a diagram for explaining correlations between rotating directions of a finger and appearances of a fingerprint in a biological authentication system according to a second embodiment.

Figure 11B is a diagram for explaining correlations between rotating directions of a finger and appearances of a fingerprint in the biological authentication system according to the second embodiment.

Figure 12A is a diagram for explaining a configuration of an authentication device in a biological authentication system according to a third embodiment.

Figure 12B is a diagram for explaining the configuration of the authentication device in the biological authentication system according to the third embodiment.

Figure 12C is a diagram for explaining the configuration of the authentication device in the biological authentication system according to the third embodiment.

Figure 13 is a diagram for explaining a configuration of an authentication device in a biological authentication system according to a fourth embodiment.

Figure 14 is an explanatory diagram of an authentication system for capturing a large number of personal features in a biological authentication system according to a fifth embodiment.

Figure 15 is a diagram for explaining an authentication process at another place in the biological authentication system according to the fifth embodiment.

Figure 16A is a diagram showing an example of management of statistical properties of biological features in the biological authentication systems according to the first to fifth embodiments.

Figure 16B is a diagram showing an example of management of statistical properties of biological features in the biological authentication systems according to the first to fifth embodiments.

Description of Embodiments

A biological authentication device serving as embodiments of a biological authentication device and a biological authentication method according to the present invention will be described below with reference to the accompanying drawings. A preferable example of the invention disclosed in the description is as follows.

More specifically, an authentication device includes an input device to place a biological object thereon, a plurality of image capture devices that captures the biological object, an image processing unit that processes images captured by the plurality of image capture devices, and a plurality of light sources to capture features of the biological object and the biological object, wherein the image processing unit includes a checking processing unit that checks first feature data stored and registered in a storage device in advance with second feature data representing the features of the biological object captured by the image capture devices, and a biological position/shape detection unit that detects position/shape information of a finger such as flexure, floating, bending, and the like of the finger on the basis of images captured by the plurality of image capture device, the plurality of light sources are arranged in a front part, a lower part, and a side part of the input device with respect to the biological object, on the basis of a detection result obtained by the biological position/shape detection unit, on/off states of the light sources or capturing operations of the image capture devices, and features used in authentication are switched depending on outputs from the biological position/shape detection unit.

In the description, it must be noted that various "functions" included in a biological authentication system may be expressed as a "unit" or a "program". For example, an image processing function, a checking processing function, and a biological position/shape detecting function may be called an image processing unit, a checking processing unit, and a biological position/shape detection unit, respectively, or called an image processing program, a checking processing program, and a biological position/shape detecting program, respectively.

First Embodiment

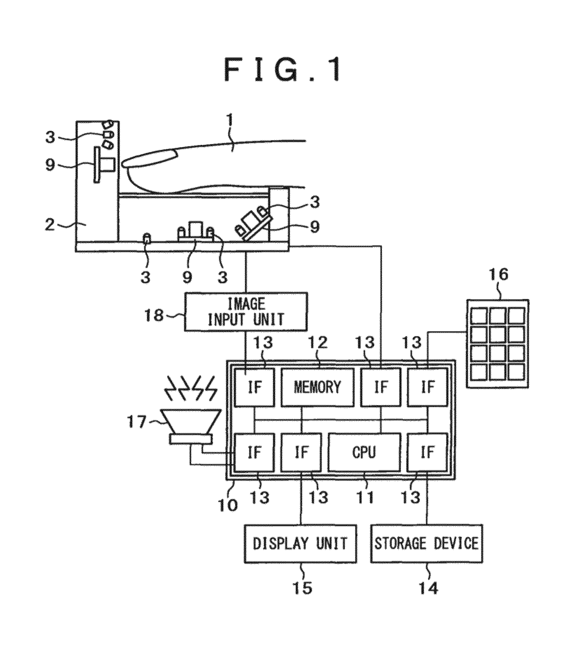

Figure 1 is a diagram shows an entire configuration of a biological authentication system using a vein pattern of a finger as biological information in a first embodiment.

As shown in Figure 1, an authentication system according to the first embodiment includes an input device 2, an authentication processing unit 10, a storage device 14, a display unit 15, an input unit 16, a loudspeaker 17, and an image input unit 18.

The input device 2 includes a light source 3 installed on a housing thereof and an image capture device 9 installed inside the housing. In the description, an image processing function of the authentication processing unit 10 and the image input unit 18 may be collectively called as an image processing unit. In any case, the authentication processing unit 10 includes an image processing function. The authentication processing unit 10, as will be described in detail later, includes, as an image processing function, a checking processing function that checks various feature data of a biological object and, in addition, a biological position/shape detecting function that detects position/shape information of biological object such as flexure, floating, bending, and the like of a finger on the basis of an image captured by the image capture device 9.

The light source 3 is, for example, a light-emitting element such as an infrared LED (Light Emitting Diode) to illuminate with an infrared light source on a finger 1 presented on the input device 2. The image capture device 9 captures an image of the finger 1 presented on the input device 2.

The image input unit 18 acquires the image captured by the image capture device 9 of the input device 2 to input the acquired image to the authentication processing unit 10.

The authentication processing unit 10 includes a central processing unit (CPU: Central Processing Unit) 11, a memory 12, and various interfaces (IFs) 13.

The CPU 11 executes programs stored in the memory 12 to various processes. The memory 12 stores programs to be executed by the CPU. The memory 12 temporarily stores an image input from the image input unit 18.

The interface 13 couples the authentication processing unit 10 to an external device. More specifically, the interface 13 couples the input device 2, the storage device 14, the display unit 15, the input unit 16, the loudspeaker 17, the image input unit 18, and the like to each other. Through the interface 13 coupled to the input device 2, a control signal to turn on/off the plurality of light sources 3 and to operate the plurality of image capture devices 9 in the input device 2 is transmitted. The images captured by the image capture devices 9 are input to the authentication processing unit 10 through the image input unit 18 and the interface 13.

The storage device 14 stores registered data of a user of the biological authentication system as first feature data in advance. The registered data is information to check a user, and is, for example, an image or the like of a finger vein pattern. In general, an image of finger vein pattern is an image obtained by capturing a vein (finger vein) mainly distributed under a skin of a finger on the palm side as a dark shadow pattern.

The display unit 15 is, for example, a liquid crystal display, and is an output device that displays information received from the authentication processing unit 10.

The input unit 16 is, for example, a keyboard to transmit information input by a user to the authentication processing unit 10. The loudspeaker 17 is an output device that transmits the information received from the authentication processing unit 10 as an acoustic signal such as voice.

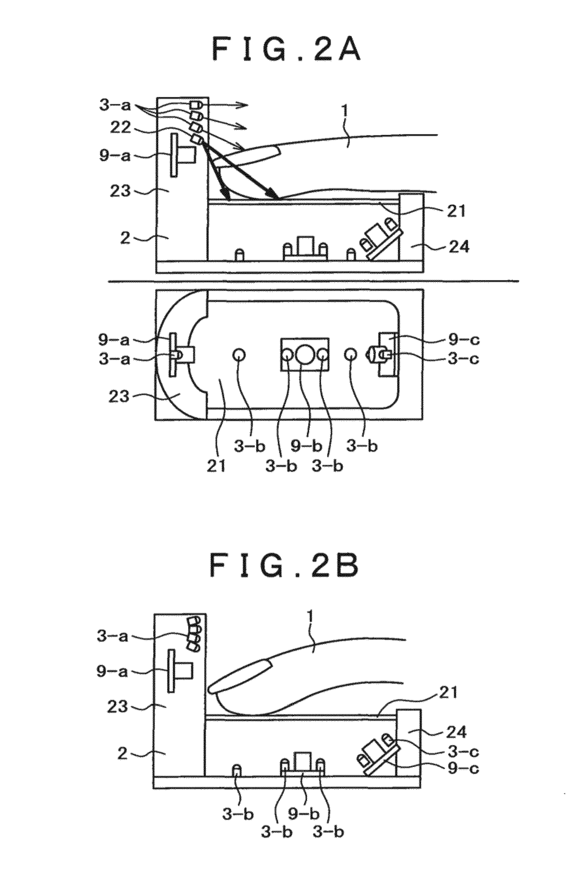

Figure 2A and 2B are diagrams for explaining structures of input devices in the biological authentication system according to the first embodiment. As a difference between the structures in Figure 2A and 2B, the former shows a state in which the finger 1 is placed such that the finger 1 and a finger placing plate 21 are parallel with each other, and the latter shows a state in which only a fingertip is placed on the finger placing plate 21. Depending on users, the base of the finger 1 is not easily brought into contact with the device. For this reason, the finger may be placed as shown in Figure 2B. In this case, authentication is performed.

Figure 2A is a sectional view of a side surface of the input device 2 shown in the upper part and a plan view of the input device viewed from the upper surface shown in the lower part. The input device 2 includes the plurality of light sources 3 and the plurality of cameras 9 to capture a vein of finger, a fingerprint, wrinkles on a skin surface, joint wrinkles, and a nail. Preferably, extended lines of optical axes of the plurality of cameras 9 cross each other at one point. This is to make it possible to capture the same part of a biological object to be captured.

In the description, parts such as a vein, a fingerprint, wrinkles, and a nail having personal features are called modalities or modals. It is assumed that a user is positioned on the right in the drawing. The finger 1 is presented to the device from the right in the drawing to extract second feature data representing the features of the biological object of the user. Light sources 3-a, 3-b, and 3-c are light sources that emit infrared light sources, and serve as light sources to capture a finger vein, wrinkles on a finger surface, joint wrinkles, a nail, and the like. Cameras 9-a, 9-b, and 9-c receive the infrared light sources to capture infrared images of the finger 1.

The input device 2 includes the finger placing plate 21 on which a user places the finger 1. The user places the finger 1 on the finger placing plate 21. As a target position on which a fingertip is placed, a circular portion is illuminated such that a guide light source 22 illuminates visible light on the finger placing plate 21. The user roughly fits and places her/his fingertip on the target to start authentication. Unlike in a conventional technique, a finger placing position is not physically fixed, and, according to the present invention, only a target position on which a finger is placed is shown to a user not to cause the user to wander, restriction on a way of placing a finger is reduced. However, a finger position presented by a user may be set on anyplace on the finger placing plate 21.

As described above, a standard way of placing a finger, as shown in Figure 2A, the finger is placed such that the finger 1 is parallel with the finger placing plate 21. However, depending on a user, the base of the finger 1 is difficult to be brought into contact with the device. For this reason, as shown in Figure 2B, even though only a fingertip is placed on the finger placing plate 21, authentication is performed.

The finger placing plate 21 is installed at a boundary separating the inside and the outside of the input device 2 from each other. Since the camera 9-b or 9-c arranged in the lower part of the device captures a video image of a biological object through the finger placing plate 21, the finger placing plate 21 is made of a material such as acrylic, glass, or the like which transmits an infrared light source. The finger placing plate 21 supports a finger of a user and advantageously prevents dust from entering the inside of the device. Furthermore, the finger placing plate 21 functions as an optical filter which reflects and blocks a wavelength, of various wavelengths included in outside light such as sunlight, which is not emitted from the infrared light source 3 and can be received by the cameras 9 to make it possible to prevent the device from being easily influenced from the outside light. At this time, for the user, the finger placing plate 21 looks black. However, the user can advantageously clearly see reflection of visible light from the guide light source 22.

The finger placing plate 21 is installed slightly under a structure 24 on the right of the housing such that, when a finger is normally placed, the base of the finger is not in tight contact with the finger placing plate 21. If the finger placing plate 21 is installed at a level equal to that of the structure 24 on the right of the housing, the entire area of the finger may be pressed against the finger placing plate 21. In this case, a vein pattern of the finger on the palm side is eliminated due to the pressure, and an information amount of a vein pattern serving as second feature data and being useful as personal features is reduced to deteriorate authentication accuracy. In contrast to this, in the configuration of the embodiment, when the upper surface of the finger placing plate 21 is lowered below the structure 24, pressure on a finger surface except for at least a fingertip can be avoided. In this manner, feature values of various fingers can be captured without eliminating the vein by pressure.

In the configuration in the drawings, a biological object is captured by a plurality of cameras installed in the device. As the cameras, the cameras 9-b and 9-c installed in the lower part of the housing of the device and the camera 9-a installed on the left side of the device in the drawings are disposed. The cameras capture the finger 1 from various angles. The two cameras 9-b and 9-c disposed in the lower part of the device capture biological information through the finger placing plate 21.

The camera 9-b is installed in the lower central part of the device such that optical axes of capture vertically face upward. The camera 9-c is inclined and installed in a lower part on the right side of the device such that the optical axis vertically faces the upper left side. The camera 9-b installed to vertically face upward captures information of the finger 1 on the finger cushion side. The camera 9-c inclined and installed captures the finger 1 on the cushion side such that the camera 9-c looks upward from the base side of the finger to the fingertip side. The camera 9-a on the left of the device is installed on a camera setting table 23 to capture the fingertip of the finger 1 and the back side of the finger from a slightly high position. More specifically, the camera 9-a can capture the opposite side of the finger 1 which cannot be captured by the cameras 9-b and 9-c installed in the lower part.

The light sources 3-a, 3-b, and 3-c are arranged around the cameras, and each of the light sources can emit reflected light or transmitted light of infrared light sources to the finger 1. The light sources 3-b and 3-c arranged in the lower part of the device illuminate the palm side of the finger 1, and light reflected by the finger surface can be observed as reflected light by the lower cameras 9-b and 9-c. The light transmitted through the finger can be observed as transmitted light by the left camera 9-a. Similarly, the light source 3-a located near the left camera 9-a illuminates the back side of the finger, light reflected by the finger surface can be observed as reflected light by the left camera 9-a, and the transmitted light can be observed by the lower cameras 9-b and 9-c.

In the embodiment, the plurality of light sources 3-a include a light source having an optical axis horizontally faces in the drawing and a light source installed to be slightly inclined downward. When the light sources having a plurality of installation angles are arranged, an appropriate light source is selected depending on a finger position to make it possible to perform illumination. Similarly, with respect to the light sources arranged in the lower part of the device, it is appropriately determined depending finger positions whether the light source 3-b installed to vertically face upward or the light source 3-c installed to obliquely face to the left is turned on.

An image of reflected light mainly displays a fingerprint, wrinkles of a skin, joint wrinkles, and the like, and an image of transmitted light mainly displays a finger vein. Since these video images are useful feature values to identify an individual, the video images are used in authentication.

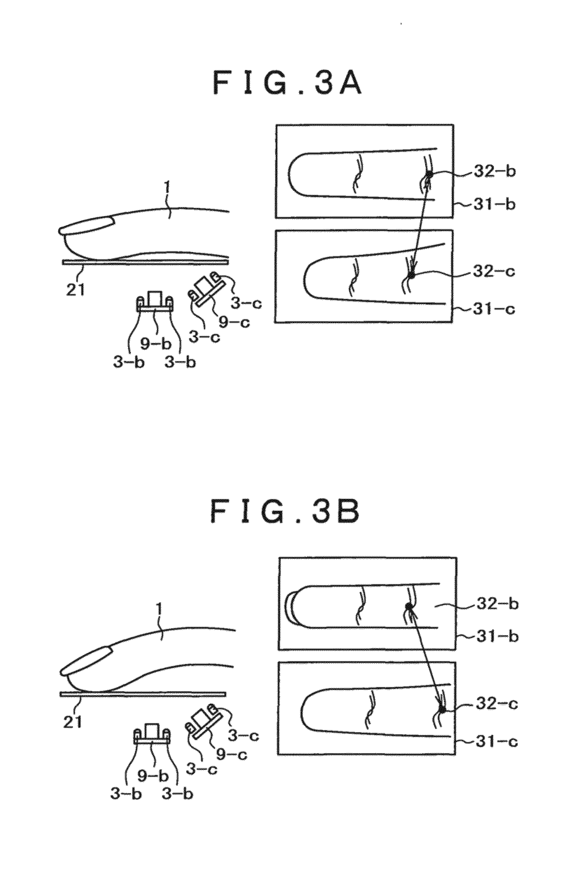

Figure 3A and Figure 3B show principle diagrams in which the input device of the biological authentication system having the configuration of the embodiment performs a distance measurement on a finger surface by object captured by the camera 9-b installed in the lower part of the device and the camera 9-c installed on the right side in the lower part of the device. Figure 3A shows a state in which the finger is not floated, and Figure 3B shows a state in which the base side of the finger is floated. The distance measurement (will be described later) can be achieved by causing the CPU 11 to execute a program.

As described above, although a user places the finger 1 on a relatively free position, in particular, floating of the finger on the base side and bending of a finger joint easily occur. Thus, in the configuration of the embodiment, a distance between a finger surface and the device is measured to make it possible to know a floating state or a bending state of the finger. Since the two cameras are installed in the lower part of the device, a distance measurement based on a commonly used stereoscopic technique can be performed. Furthermore, since the cameras in the lower part of the device are arranged side by side in the longitudinal direction of the finger, in particular, the cameras can easily capture a change in distance in a floating direction of the finger to make it possible to perform a detailed distance measurement. More specifically, for a vertical change of the position of the finger on the base side, a video image in the camera 9-c which can capture the video image immediately near the base of finger largely changes, and even a slight change can be captured.

When an image obtained by reflecting light on a finger surface is captured, for example, characteristic shapes such as a fingerprint and joint wrinkles which are present on the finger surface are displayed. Thus, in a state in which light is illuminated on the finger 1 by the light source 3-b in the lower part of the device, a reflected image 31-b of the finger 1 on the palm side captured by the camera 9-b vertically facing upward and a reflected image 31-c of the finger 1 on the palm side captured by the lower camera 9-c obliquely facing upward are captured. In this case, the common reflected image can be captured from different angles. When attention is paid to interested points 32-b and 32-c of the object, the points are displayed at different coordinates in the image of the lower camera 9-b and the image of the right camera 9-c. A relative positional relationship between the interested points changes due to floating of a finger or the like.

Figure 3A shows a state in which the finger is not floated from the upper surface of the finger placing plate 21, and Figure 3B shows a state in which the base of finger is floated from the upper surface of the finger placing plate 21. In Figure 3A, with respect to the same interested point 32-b, the interested point 32-b displayed on the reflected image 31-b is on the right of the corresponding point 32-c displayed on the reflected image 31-c in the drawing. On the other hand, in Figure 3B, the positional relationship shifts because the finger is floated, the interested point 32-b displayed on the reflected image 31-b moves left. The change is quantitatively considered to make it possible to acquire a three-dimensional shape of the finger.

In order to acquire a three-dimensional shape, the positions and the directions of the optical axes of both the cameras 9-b and 9-c must be known. When the positions and the directions of the optical axes are known, a distance to an interested point can be calculated by the principle of triangulation. More specifically, parameters of the positions and the directions of the cameras are set by a commonly used three-dimensional measurement method, a relationship between a corresponding relationship between pixels of both the cameras and a distance is calibrated, and a large number of corresponding points on the finger surface on both the images can be obtained in anywhere. In this case, a three-dimensional shape of the entire area of the finger surface can be obtained.

In order to achieve this, between the captured images 32-b and 32-c, the same interested points must be detected and associated with each other. The interested points can also be obtained such that small spot light having high directivity is illuminated on an arbitrary point, and the reflected light is captured by the two cameras. In this case, coordinates of points at which the spot light is displayed on both the images are obtained, and three-dimensional distances to the points are calculated. This operation is repeated while the position of the spot light is moved. In this manner, since a group of corresponding points of the entire area of the finger surface can be obtained, a three-dimensional structure of the finger surface can be acquired. However, since a device for controlling the spot light is required to achieve the above method, costs increase. In contrast to this, a method of extracting feature points by image processing from feature shapes of a finger surface displayed on two images and calculating corresponding points of the feature points between both the images may be used. This process can be achieved by methods of feature point extraction and corresponding point searching using a commonly used luminance gradient such as a SIFT feature value. In this manner, the costs of the device can be reduced.

A concrete example of three-dimensional structure detection using the SIFT feature value will be described below. First, the CPU 11 of the authentication processing unit 10, on the basis of information of the positions and the optical axes of the two cameras, creates a distance table which associates coordinates on the images of the two cameras with distances from the cameras on the memory 12. With respect to the reflected images 32-b and 32-c of the finger surface simultaneously captured by both the cameras, a large number of SIFT (Scale-invariant feature transform) feature points are extracted, and, subsequently, corresponding points of the feature points on both the images are searched for. In this manner, a large number of corresponding points between both the images can be obtained. Finally, distances from the cameras are acquired from the distance table to make it possible to obtain a three-dimensional structure of the finger surface. Instead of the SIFT feature value, when corresponding points are calculated by a block matching method that performs template matching to block regions cut out of images, the same effect as described above can be obtained. In the acquisition of corresponding points by image processing, there are a large number of erroneous corresponding points. In contrast to this, when there are points having a torsional relationship and geometrically conflicting with each other, a process which employs, of combinations of groups of consistent points, a group including a largest number of corresponding points is executed to make it possible to stably and accurately acquire a three-dimensional structure of a finger surface.

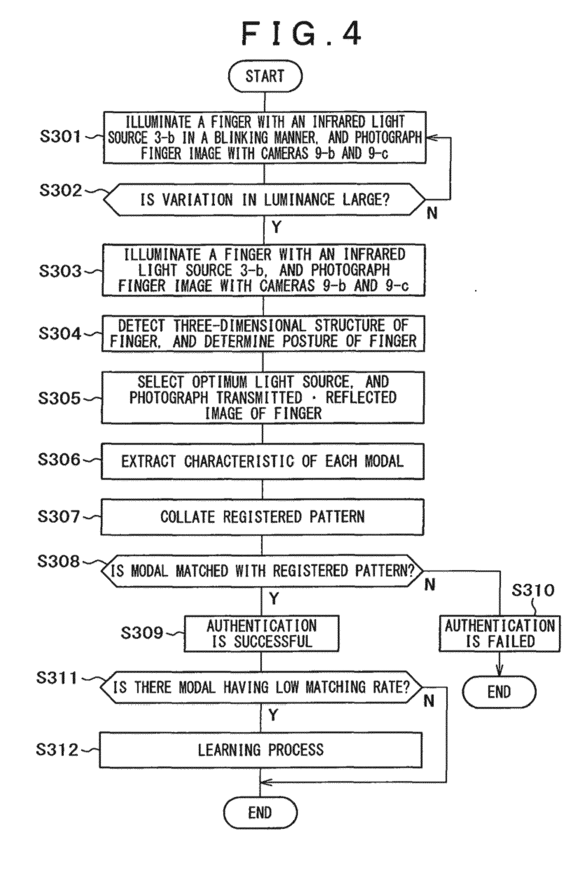

Figure 4 is a diagram showing a process flow for explaining a procedure of the biological authentication system according to the first embodiment. Execution control of the process flow can be achieved by a program executed by the CPU 11 in the authentication processing unit in Figure 1. The process flow, on the basis of an image captured by the image capture device 9 described above, achieves an image processing function including a biological position/shape detecting function of detecting position/shape information of a biological object such as flexure, floating, and bending of a finger, and a checking processing function of checking various feature data of the biological object.

First, with execution of the program by the CPU 11, by a control signal transmitted to the input device 2 through the interface 13, the light source 3-b arranged in the lower part of the device illuminates a finger with an infrared light source in a blinking manner. At the same time, with the execution of the program by the CPU 11, by a control signal transmitted to the input device 2 through the interface 13, video images are captured by the lower cameras 9-b and 9-c (S301).

At this time, when there is no object above the device, light from the light source is emitted upward without being reflected, and the light cannot be observed by the lower camera. On the other hand, there is an object above the device, light from the light source is reflected by the surface of the object, and the light can be observed by the lower camera. Thus, this means that an object is present in an image region in which a luminance changed in accordance with a cycle of blinking of the light source. When the area of the image region in which the change in luminance occurs is larger than a predetermined threshold value, the device understands that a finger is presented and starts a capturing process (S302).

First, with the execution of the program by the CPU 11, the lower light source 3-b illuminates a finger, the video image is captured by the two lower cameras 9-b and 9-c (S303). In the process, although reflected light illuminated on the finger is captured, the intensity of the light source is adjusted to optimally display the reflected light. For the detected region in which the object is present, with the execution of the program by the CPU 11, a three-dimensional distance to the portion is calculated by using the distance measurement method described above. In this case, it can be determined whether a finger surface is in contact with the finger placing plate 21, or a place with which the finger surface is in contact can be determined. The accuracy and the resolution of the three-dimensional structure of the finger surface vary depending on the applied three-dimensional detecting method and an environment in which the device is installed. However, at least, it need not only be determined whether the finger on base side is floated or whether a fingertip is floated. When even this determination cannot be performed, a feedback for ordering the user to place her/his finger again may be given to the user.

On the basis of the acquired shape of the finger surface, an attitude of finger is determined (S304), a part to be captured, a capturing method, and a correcting method are determined. In this manner, a transmitted image and a reflected image of each part are captured by a method the conditions are best (S305). The function executed in up to S305 is the biological position/shape detecting function in the embodiment.

On the basis of the obtained images, images of a finger vein, a fingerprint, wrinkles on skin, joint wrinkles, and a nail are acquired, and feature values of the images are extracted as second feature data (S306). The feature value extraction is a part of the image processing function executed by the authentication processing unit 10. By the checking processing function included in the image processing function, the obtained second feature data is checked with the registered data serving as the first feature data (S307), and a matching determination is performed (S308). When the data are matched with each other, the authentication is successful (S309). When the data are not matched, the authentication is failed (S310).

Finally, although the authentication is successful, it is determined whether there is a modal having a matching rate (S311). If the modal is present, a learning process function of learning registered data of the modal is performed (S312). A concrete example of the learning process function will be described later.

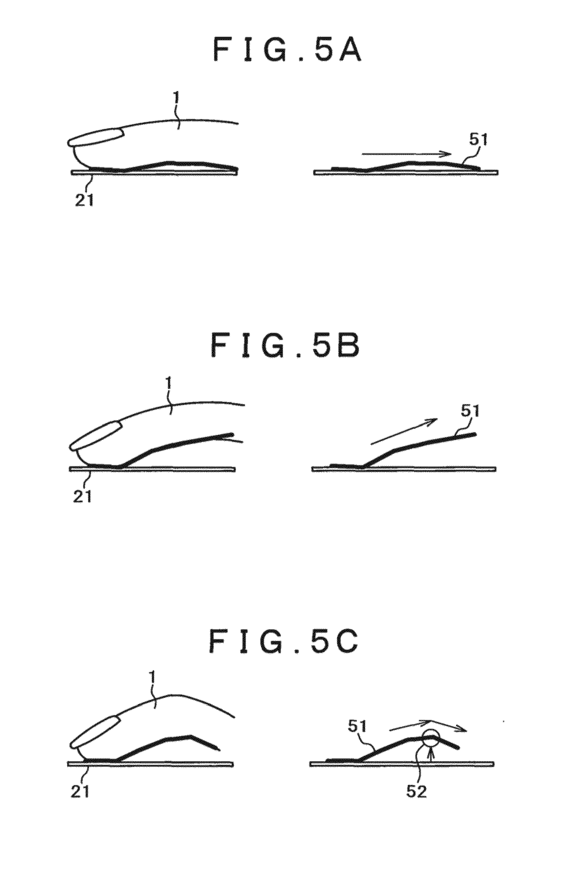

Figure 5A, Figure 5B, and Figure 5C show a concrete example of the biological position/shape detecting function which is achieved by execution of the program by the CPU 11 to determine an attitude of finger. The attitude of finger is determined by a three-dimensional structure 51 of a finger surface on the palm side, the three-dimensional structure 51 being acquired by the distance measurement method. As shown in Figure 5A, when the position of the three-dimensional structure 51 of the finger surface is roughly located at a position close to the finger placing plate 21, as indicated by an arrow on the right in the drawing, it can be determined that the finger is placed in parallel with the device, in particular, that the base of finger is not floated. This determination can be performed by determining whether the highest level of the three-dimensional structure 51 of the finger surface does not higher than a level corresponding to a specific threshold value in the program for achieving the biological position/shape detecting function.

As shown in Figure 5B, when the level of the base of finger in the three-dimensional structure 51 of the finger surface is separated from the level of the finger placing plate 21 by the specific threshold value, by the biological position/shape detecting function, as indicated by an arrow on the right in the drawing, it can be determined that the base side of finger is floated. Similarly, a case in which a fingertip is floated can also be determined.

Furthermore, as shown in Figure 5C, whether a finger joint is bent can be determined such that, as indicated by two continuous arrows on the right in the drawing, a state in which the three-dimensional structure 51 of the finger surface rises from the fingertip to the base of finger and falls halfway is detected by a program process for achieving the biological position/shape detecting function.

A state in which a finger joint is oppositely warped can be similarly detected. As a concrete determining method, the three-dimensional structure 51 of the finger surface is regarded as a curved surface and spatially primarily and secondarily differentiated, on the basis of the result, a curvature of each place for the three-dimensional structure 51 of the finger surface is calculated, and, on the basis of the result, a maximally bent place 52 being convex upward is searched for on the curved surface. The level of the curved surface is higher than the level corresponding to the specific threshold value, it is determined that the finger joint is flexed at the place.

Furthermore, when various personal features included in a finger are to be captured, by using a result of state detection of a finger such as the presence/absence of flexure of a joint, a capturing method suitable for the finer state can be employed.

When a fingerprint is to be captured, a fingertip position is present around the position of an end point on the left in the drawing when the three-dimensional structure 51 of the finger surface is acquired as described above. The image of the part is extracted to make it possible to pick up a fingerprint image. Although fingerprint image can also be captured by illuminating with a reflected light, a fingerprint formed in a dermal layer can also be captured by transmitted light. Thus, by the biological position/shape detecting function executed in S304 and S305, a light source being closest to the detected position of the fingertip illuminates. For example, reflected light is illuminated, of the plurality of light sources 3-b in Figure 2A, a light source being closest to the fingertip may illuminate. When transmitted light is illuminated, of light sources of the plurality of light sources 3-a in Figure 2A, illuminating the lower part of the device, a light source having an angle at which light can be illuminated on the fingertip position is selected. In this manner, a fingerprint image having an appropriate luminance can be obtained.

Furthermore, wrinkles on the palm side distributed on a finger surface and wrinkles of a joint can also be similarly captured. When the finger 1 has any attitude, light need only be illuminated by using the light source 3-b vertically facing upward is used. At this time, since the entire area of the finger must be uniformly illuminated, the light sources 3-b are independently controlled to perform illumination at an intensity at which uniform reflected light can be obtained. Similarly, information of a skin surface on the back side of hand is also captured. In this case, the light source 3-a illuminates on the finger 1, and the reflected light is captured by the camera 9-a. In this case, as described above, the illumination intensities of the plurality of light sources 3-a are independently controlled and adjusted to obtain a uniform luminance.

In addition, a video image obtained by capturing wrinkles of a finger on the back side also displays a video image of a nail. The position of the fingertip can also be obtained by the above process. However, the coordinate system is the same as those of the cameras 9-b and 9-c in the lower part of the device. However, when the installation position of the camera 9-a and the direction of the light source are known, the camera in the lower part of the device can be associated with the coordinates, and data can be converted into the position of a fingertip in the coordinate system of the camera 9-a. A nail is detected with respect to the position to reduce detection error, and shape information and luminance information of the presented nail can be stably obtained.

In the biological authentication system having the configuration of the embodiment, since the light sources and the cameras emit and receive light, color information cannot be acquired. However, as a matter of course, when a color camera is used as the camera 9-a, color information can be acquired. Alternatively, an element which can illuminate a plurality of wavelengths is used as a light source, and color information can also be acquired on the basis of a difference between images acquired at the wavelengths. In this manner, an information amount acquired from a nail increases by using the color information, and improvement of authentication accuracy is expected.

In capture of a finger vein pattern, it is known that light is illuminated from the back side of a finger to make it possible to most clearly capture the finger vein pattern in transmitted light capture which captures light from the side opposing the back side. Thus, when the finger is placed on the surface of the finger placing plate 21, the light source 3-a illuminates, and transmitted light on the finger cushion side is captured by the two cameras 9-b and 9-c, so that a finger vein pattern can be acquired. Furthermore, the lower light sources 3-b and 3-c illuminate, and transmitted light from a finger on the back side is captured by the camera 9-a, so that a vain pattern of the finger on the back side of hand can be acquired. At this time, when scattered light which is not directly illuminated on the finger and goes around the finger is illuminated on a skin surface on a side on which a finger vein is observed, an inside vein cannot be easily observed, and a video image becomes blurred. Thus, control that turns on only a necessary light source depending on the position of finger and turns off the other light sources must be performed.

In order to achieve this, in the embodiment, the three-dimensional information of the finger obtained in S304 described above is used to optimize light source illumination. As described above, since the three-dimensional shape of the finger has been obtained, a position and an angle at which the finger 1 is placed can be detected. First, in S305 described above, when a vein on the palm side is captured, the light sources 3-a are turned on. At this time, when the finger 1 is placed in parallel with the finger placing plate 21, of the light sources 3-a, only light sources each having an optical axis facing obliquely downward, and light sources each having a horizontal optical axis are turned off. If the base side of the finger 1 is floated, the horizontal light sources are also turned on. Of the light sources each having an optical axis facing obliquely downward, a light source having an extended line on which the finger 1 is not present is turned off. With the above control, image quality of a transmitted image of a finger vein is prevented from being deteriorated, and a power consumption can be reduced. When a vein on the back side is captured, with respect to the light source 9-b on the lower part of the device, a light source immediately above which the finger 1 is not present is turned off. In this manner, unnecessary light such as leakage light rarely occurs, and a clearer vein image can be obtained.

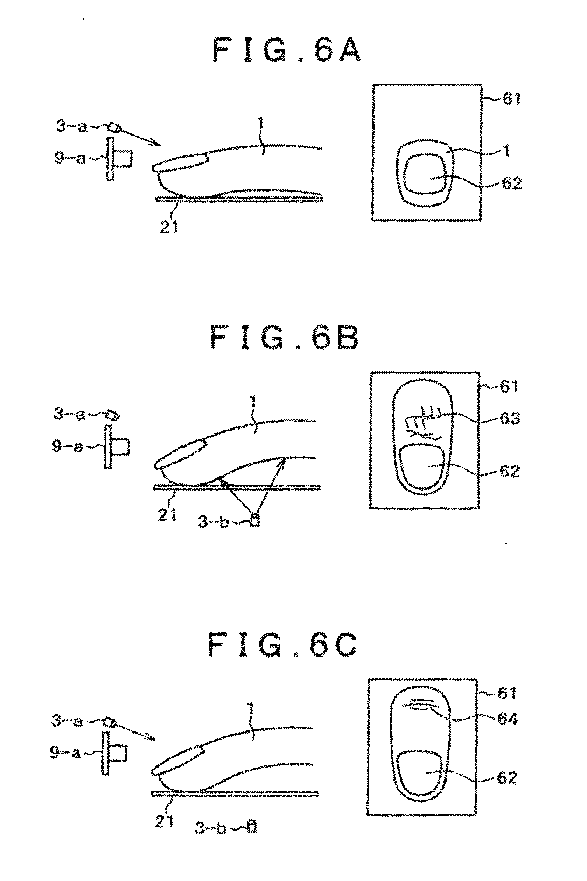

Figure 6A, 6B, and 6C are pattern diagrams showing a manner of capturing information on the back side of hand in the biological authentication system according to the embodiment. Up to now, the embodiment in which finger images on the palm side and the back side of hand are captured has been described. However, depending on a way of placing a finger, the pattern on the back of hand or on the palm side may not be obtained. Figure 6A shows an example in which the finger 1 is not floated from the device, and Figure 6B and Figure 6C show an example in which the finger 1 is flexed. Each of the drawings schematically shows a video image captured by a camera on the right side.

When the finger 1 is not floated, depending on an installation level of the camera 9-a, an image 61 of the camera 9-a, as shown in the right side in Figure 6A, shows a case in which parts other than a nail part cannot be observed. In this case, since a finger vein on the back side of hand and joint wrinkles cannot be captured, according to determination executed by the biological position/shape detecting function in S304, the finger vein on the back side of hand and the joint wrinkles are excluded from objects to be captured. On the other hand, as shown in Figure 6B or Figure 6C, when the base side of the finger 1 is floated, as shown in the right-side part of the drawing, not only a nail but also a finger vein 63 on the back side of hand and joint wrinkles 64 can be observed. Figure 6B shows an example in which the light source 3-b illuminates to observe the vein 63 on the back side of hand, and Figure 6C shows an example in which the light source 3-a illuminates to observe the joint wrinkles 64. In this manner, since information which can be captured changes depending on a placing state of the finger 1, the placing state of the finger 1 is determined by the biological position/shape detecting function. Depending on the determination result, control is performed such that only the captured information is used in authentication.

The camera 9-a may be installed at a higher position of in the device, and the optical axis of the camera 9-a may be more inclined downward to capture the finger 1 on the back side of hand. In this manner, in many cases, biological information of the finger on the back side of hand can be captured. However, since the height of the device increases in this configuration, the restriction of a place in which the device can be installed increases, and the position at which the finger is placed varies. For this reason, the back side of hand is not always captured. Thus, in any case, as shown in Figure 6A, a case in which the back side of hand cannot be captured must be considered.

By the checking processing function included in the image processing function of the authentication processing unit 10 having the configuration of the embodiment, on the basis of the second feature data which is information of a vein on the finger cushion side captured as described above, a vein on the back side of hand, a fingerprint on the finger cushion side, finger wrinkles, joint wrinkles, wrinkles on the back side of hand, and a nail captured as described above, checking with the registered information serving as the first feature data is performed.

Checking of veins and fingerprints by the checking processing function can be performed by using a commonly known method in execution of the program by the CPU 11. More specifically, a method of detecting a line pattern darker than a transmitted infrared light source with respect to a vein and calculating a degree of similarity between the line pattern and a registered line pattern by template matching can be used. A method of detecting feature points such as branch points and end points of a fingerprint, calculating points corresponding to registered feature points, and degrees of similarity between the feature points and the corresponding points can be used. However, since a three-dimensional shape of a presented finger changes with time as described above, the three-dimensional shape may be corrected on the basis of the three-dimensional shape detected by the biological position/shape detecting function. For example, an image captured by the camera 9-b or an extracted feature value is projected on a plane parallel with the finger placing plate 21 to make it possible to create a feature value independently of presenting angles of a finger. A feature value itself may not projected on a plane, images of a vein, a fingerprint, and the like which are captured may be recorded together with the three-dimensional structure, and the images may be temporarily planarly projected, or checking may be performed in a space of a three-dimensional shape.

Similarly, as checking by joint wrinkles of a finger, like the checking of a finger vein, checking can be performed by detecting a line pattern.

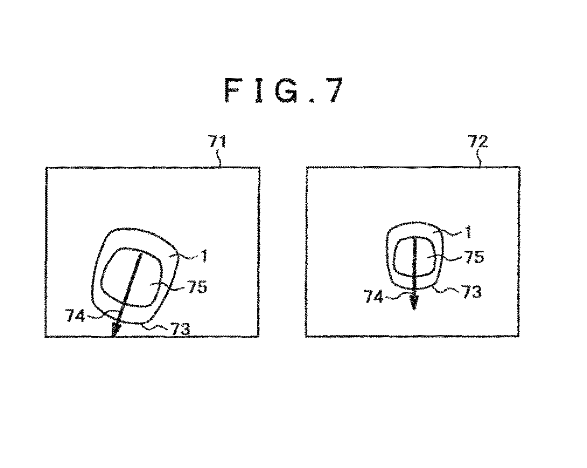

Figure 7 is a diagram schematically showing a concrete example in which checking is performed by the shape of a nail in the biological authentication system having the configuration of the embodiment. The checking by the shape of a nail can also be achieved by executing a program by the CPU 11 in the authentication processing unit 10 described above. As shown in the left-side part of the drawing, the finger 1 and a nail 62 displayed on a captured nail image 71 are slightly inclined. First, a finger region 73 is detected. An image in which the finger 1 is not present is stored in advance, and a finger region can be detected by a difference between the image and an image obtained when it is detected that the finger 1 is placed. An edge of the finger region is detected. This is obtained by searching for a circumference obtained when the finger region is binarized. A main direction 74 of a fingertip is detected. Since the edge of the finger region 73 is elliptical, the main direction 74 can be obtained by calculating a major axis of the edge by Hough transformation or the like. Subsequently, a nail region 75 is calculated. This is obtained by performing segmentation to surround regions having different textures in the finger region by a graph cut method or a commonly used method such as a snake. The captured nail image 71 is normalized to obtain a normalized nail image 72. The image is rotated around the center of gravity of the nail region 73 such that the main direction 74 obtained in advance faces immediately downward, and enlargement/reduction is performed such that a distance between two crossing points of the nail region 75 and the main direction 74 of the finger is constant. In this manner, the normalized nail image 72 shown in the right-side part in Figure 7 is obtained.

In this manner, by using the normalized nail image, evaluation is performed by template matching of the nail image, a least square error for a difference level between the nail image and an outer peripheral shape of the nail region 75, or the like to determine a degree of similarity of the nail itself. As a result, the checking can be achieved.

Since a nail has a crescent-shaped area, the crescent-shaped area may be detected and registered by the same method as the method of obtaining a nail region, and checking may be similarly performed.

The authentication processing unit 10 of the biological authentication system having the configuration of the embodiment, as described above, in checking (S307) with the registered pattern in Figure 4, on the basis of results obtained by performing checking with various modals, an integral probability is calculated by Bayesian probability. More specifically, in the embodiment, a plurality of feature values of a finger are detected from a plurality of image capture devices, a probability that the plurality of feature values appear, i.e., a frequency of appearance is calculated, and checking is performed on the calculated probability.

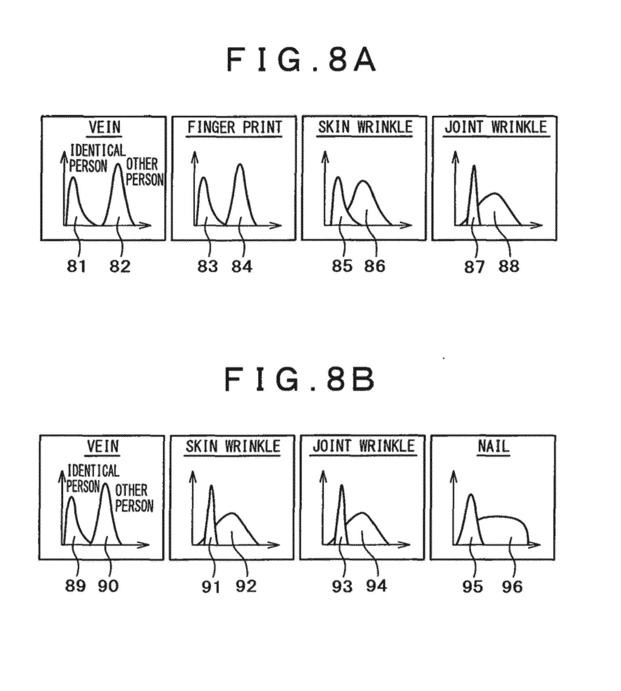

Figure 8A and Figure 8B are diagrams showing example of appearance frequency distributions of checking values of modals of an identical person and other people. Figure 8A shows a distribution of checking values for information of a finger on the palm side, and Figure 8B shows a distribution of checking values of a vein, a fingerprint, skin wrinkles, and joint wrinkles for information of a finger on the back of hand. In the embodiment, it is assumed that checking values obtained by the checking processing function of the authentication processing unit 10 are regarded as difference levels between feature values. Figure 8A and Figure 8B show two appearance frequency distributions in units of modals. In each the drawings, the abscissa indicates the checking values, and the ordinate indicates the frequency of appearance. Since a difference level is low in checking between the same modalities, identical person distributions 81, 83, 85, 87, 89, 91, 93, and 95 appear on the left side in the drawing. Similarly, other people distributions 82, 84, 86, 88, 90, 92, 94, and 96 appear on the right. Even the same modalities have different independent authentication accuracies. Thus, it is understood that a distance between the identical person distributions serving as distributions of checking values between the same modalities of the same finger is different from a distance between the other people distributions serving as distributions of checking values between the same modalities of another finger.

In this case, a concrete example in which, in the checking processing function (S307, S308, S309, and the like in Figure 4) achieved by executing the program by the CPU 11 of the authentication processing unit 10 of the biological authentication system having the configuration of the embodiment, checking values for a plurality of modalities are integrated to finally identify the registrant will be described below. Prior to the explanation of the method, an outline of a supposed authentication system and definition of symbols to be used will be described. First, feature values of M modals of N registrants are represented by E[N][M]. A feature value of modals of an unknown inputting person X is represented by I[M]. A checking value obtained by checking between the registered data E and input data I is represented by S[N][M]. It is assumed that an allowable range of the checking values is 0 to 1, and the values represent difference levels. More specifically, when the checking value is 0, it is considered that feature values are completely matched with each other.

When a checking value S is acquired by checking with the input data I, the person is accepted as a registrant R. In this case, FAR (= nFAR) in 1 : N authentication can be described as follows by using a posterior probability.

$$nFAR(HR|S) = 1 - P(HR|S) \cdots (1)$$

where

$$P(HR|S) = \Pi_{\{m=0 \sim M-1\}} GpI[R][m](S[R][m]) \ /$$

$$(\Sigma_{\{n=0 \sim N-1\}} \{\Pi_{\{m=0 \sim M-1\}} GpI[n][m](S[n][m])\} + 1), \cdots (2)$$

where,

$$GpI[R][M](S) = G[R][M](S)/I[R][M](S), \cdots (3)$$

In this case, G[R][M](S) and I[R][M](S) are an identical person distribution and an other people distribution of a modal M of a registrant R, respectively. The value GpI[R][M](S) is a likelihood ratio. Reference symbol HR denotes an event in which an inputting person X is identical to the registrant R, and a value P(HR|S) means a posterior probability that the event HR is established after the checking value S is observed.

Equation (1) is an FAR (False Acceptance Rate) of the authentication system. This dominates a security level of the system. Thus, an arbitrary value is set for the FAR. When the registrant R having an FAR lower than the threshold value is present, the inputting person is accepted as the registrant.

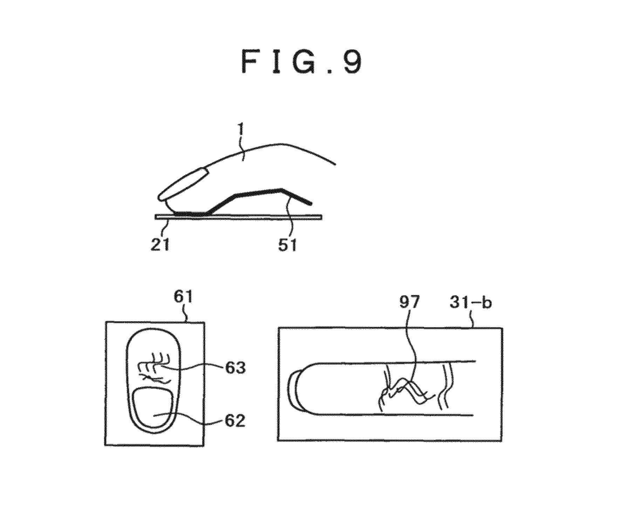

Figure 9 is an explanatory diagram of a concrete example of a determining process in a finger flexure state as shown in the upper part of the drawing in the biological authentication system having the configuration of the embodiment. When it is determined by the biological position/shape detecting function of the authentication processing unit 10 that a finger is flexed, a finger vein pattern on the palm side may be rarely observed because of sagging of a finger skin. In contrast to this, when a finger is warped back, a finger vein on the back side of hand is difficult to be observed. At this time, when the pieces of information are utilized for checking, even though a three-dimensional structure of the finger is normalized and geometrically corrected, preferable matching cannot be obtained. Thus, when the finger joint is flexed forward, the authentication processing unit 10, in the subsequent checking processing function, does not check a finger vein on the palm side and joint wrinkles of a finger and performs authentication on the basis of other information. More specifically, on the basis of the flexure state serving as a first feature of the finger, the qualities of finger veins on the palm side and the back side of hand serving as a second feature are determined. On the basis of the determination result, information used in authentication can be selected.

In the example in the drawing, the joint of the finger 1 is largely flexed, and, as shown in the lower right part in the drawing, a vein 97 on the palm side displayed on the image 31-b is not easily observed. In contrast to this, as shown in the lower left part in the drawing, the vein 63 on the back side of hand can be clearly captured because the skin on the back side of hand is stretched not to easily form wrinkles. Thus, in the flexure state of the finger joint described above, in the authentication processing unit 10, with respect to a checking result of the vein pattern on the palm side and a checking result on the back side of hand, a weight on the checking result on the palm side of hand is reduced or zeroed, so that a probability is calculated to give priority the checking result on the back side of hand. Similarly, when the finger joint is warped in the opposite direction, checking of a finger vein on the back side of hand or joint wrinkles is not performed. In this manner, biological information in a capturing state in which accuracy may be deteriorated is avoided from being used, and overall accuracy can be prevented from being deteriorated.

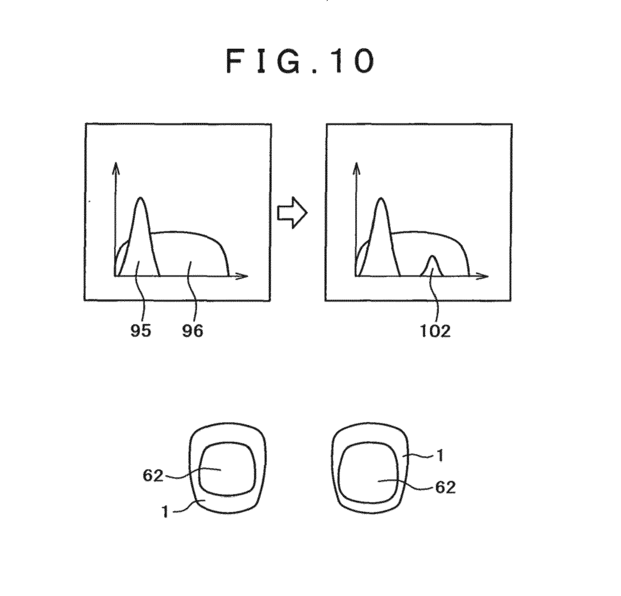

Figure 10 is an explanatory diagram of a concrete example of a learning process function of a probability obtained when a registered modal changes in the authentication processing unit 10 of the biological authentication system having the configuration of the embodiment. The learning of a probability distribution corresponding to a learning process (S312) in the process flow in Figure 4. More specifically, the authentication processing unit 10, in execution of the program by the CPU 11, as a learning process (S312), a learning process function of updating a probability of a first feature value of a plurality of feature values on the basis of checking results calculated by the other feature values and the detected first feature value.

As described above, depending on an angle at which a finger is presented, information of a finger vein, a fingerprint, wrinkles, and a nail to be captured changes. For this reason, it is supposed that a change of information with which simple geometrical correction cannot cope occurs. Furthermore, for example, it is assumed that, due to aging of a biological object, an ornament such as a fake nail, or the like, a modal essentially changes from registered information. Thus, as described above, a learning process function of performing checking by using a large number of modals, and newly additionally registering all the pieces of captured biological information when authentication is accepted, is installed.

Figure 10 shows an example of the learning process function obtained when a matching rate of the mail 62 is low. Although the user registers the normal nail 62 as shown in the lower left part in the drawing in registration, it is assumed that a fake nail 101 as shown in a lower right part in the drawing is attached in this inputting attempt. Since a modal except for a nail has a high matching rate, the authentication can be correctly accepted. However, as a result of checking of the nail 62, since the checking value does not conform to the identical person distribution 95 shown in the upper left part in the drawing, a matching rate is determined to be low. In this case, the authentication system of the embodiment adds the feature value of the fake nail 101 in this attempt as registration data of the user, and additionally registers the identical person distribution 102 corresponding to the checking values obtained when the same fake nail 101 is input. In this manner, when the finger 1 with the fake nail 101 is input, a checking value depending on the added identical person distribution 102 shown in the upper right part in the drawing is obtained. For this reason, the matching rate can be suppressed from being deteriorated also in the checking of the nail. Since the original data of the nail 62 and the feature data of the fake nail 101 are added, the system learns that the user may possibly attach the fake nail 101 used in the attempt to her/his nail, and the above probability calculation can be more correctly performed.

When the fake nail 101 is captured for the first time, a large number of checking values of the same nails cannot be obtained. For this reason, the identical person distribution cannot be easily obtained. In this case, noise or deformation is intentionally added to one image obtained by capturing the fake nail 101, it is regarded that pseudo capturing is performed many times, and mutual checking may be performed to acquire a large number of checking values. In this manner, the identical person distribution can be estimated by performing capturing once.

In relation to a decrease in matching rate with the registered data caused by the aging or the ornament, the matching rate may decreases simply because a way of placing a finger is different from the way of placing a finger in registration. In contrast to this, the three-dimensional structure of a finger, a presenting angle of the finger, and capture information may be simultaneously stored and may be stored while being linked with biological information obtained at this time. In this case, at the next time or later, when a finger is placed at an angle of the finger, only biological information stored as the angle is used to perform checking. In this manner, since checking can be performed with respect to only a feature value depending on a finger angle, checking with unnecessary data is prevented. For this reason, a probability that an erroneous other people is accepted can be reduced to contribute to an increase in processing rate.

Data additionally registered when authentication is accepted may be limited to biological features having a considerably low matching rate. In this manner, unnecessary registered data need not be learned, and a registered data size can be reduced.

Second Embodiment

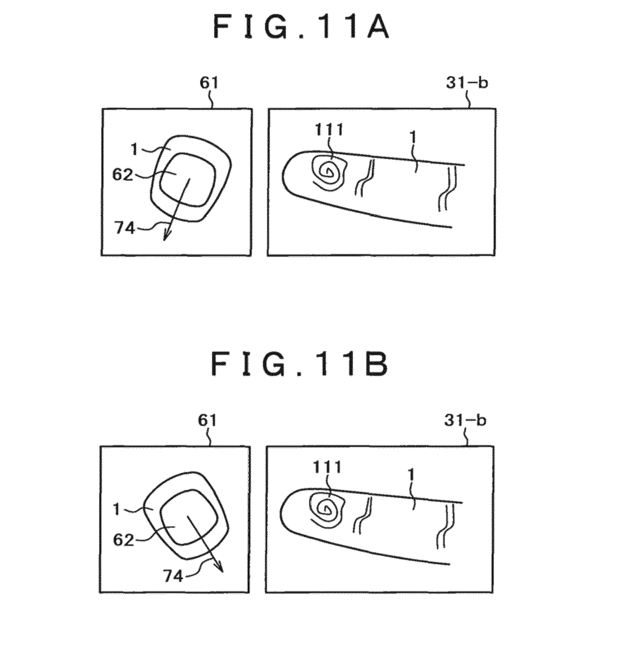

Figure 11A and Figure 11B are explanatory diagrams for associating feature values of a finger on the palm side and the back side of hand in a biological authentication system according to a second embodiment. This is an embodiment in which a first feature of a finger is extracted from an image captured by a first image capture device of a plurality of image capture devices, and a second feature of the finger is extracted from an image captured by a second image capture device of the plurality of image capture devices, a spatial positional relationship between the first feature and the second feature is acquired from the extracted first feature, and the quality of the second feature is determined to improve authentication accuracy.

Relative positional relationships between a video image, shown in the left-side part in each of the drawings, of the nail 61 captured by the camera 9-a near a fingertip and video images of, shown in the right-side part in each of the drawings, a fingerprint 111, skin wrinkles, joint wrinkles, a finger vein, and the like are correlated to each other. More specifically, since these are pieces of information of the same finger on the front surface and the rear surface, the spatial and geometrical positional relationships are stored.

For example, as shown in Figure 11A, when the finger 1 is registered, it is assumed that the finger 1 is presented such that the finger is rotated around the major axis of the finger. Accordingly, as the nail 62, a nail rotated depending on the rotating angle is captured. However, the fingerprint 111 on the rear surface side of the nail is similarly rotates depending on the angle. More specifically, when the main direction 74 of the fingertip and a fingertip position are extracted from the video image of the nail by the biological position/shape detecting function of the authentication processing unit 10, an angle at which the fingerprint 111 is captured is determined. Similarly, when different rotating angles are detected, the fingerprint 111 is normally captured from different angles. Figure 11B shows an image captured at a rotating angle different from that in Figure 11A.

At this time, the main direction 74 of the fingertip is calculated on the basis of the video image of the nail, the resultant information and the feature value of the nail 61 serving as the first feature and a feature value of the fingerprint 111 serving as the second feature are stored as pairs.

The biological authentication system performs checking with an input finger. A finger shown in Figure 11A is defined as a registration finger, and a finger shown in Figure 11B is defined as an input finger. The finger in Figure 11B is a finger of a person different from that of the finger in Figure 11A. The main direction 74 of the fingertip is calculated from the image of the nail 62 as described above, and alignment is performed on the basis of attitude information of a registered finger. At this time, although the nail 62 has an attitude different from that in registration shown in Figure 11A, it is assumed that a checking result of only the fingerprint 111, it is determined that the fingerprints are matched. The reasons why the fingerprints are similar to each other although the attitudes of the fingers are different from each other are classified into a reason that the fingerprints of both fingers are similar to each other and fingerprint checking processing can check a fingerprint while following deformation of the fingerprint and a reason that fingerprints which are essentially similar to each other become similar to each other because the attitudes of the fingers are changed.

In the former, since the fingerprints are essentially similar to each other, an increase in matching rate cannot be prevented, and comprehensive determination must be performed on the basis of a checking result of another modality. In the latter, a range in which deformation is allowed by a processing unit checking a fingerprint is determined in advance, it is determined whether the attitude of the finger obtained from the video image of the nail 62 serving as the first feature falls within the allowable range. At this time, a case in which, although the rotation or the like of the finger does not fall within the allowable range, when the feature values of the fingerprint 111 serving as the second features are matched with each other means that the fingerprints of different fingers are accidently matched with each other. In this case, the checking processing function of the authentication processing unit 10 of the biological authentication system of the embodiment discards a determination result meaning that the fingerprints are matched with each other. In this manner, accidental matching between different fingers can be avoided to make it possible to improve authentication accuracy.

When an angle at which a finger rotates increases, an error of determination whether the rotation falls within the range allowed by the fingerprint checking processing function increases. Thus, a distribution of probabilities that a finger attitude can be accurately determined on the basis of a video image of nail is evaluated in advance, and, when the reliability of information becomes lower, an overall weight on a checking result of a fingerprint may be reduced.

Third Embodiment

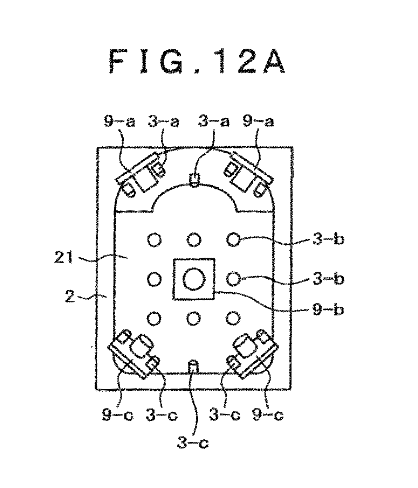

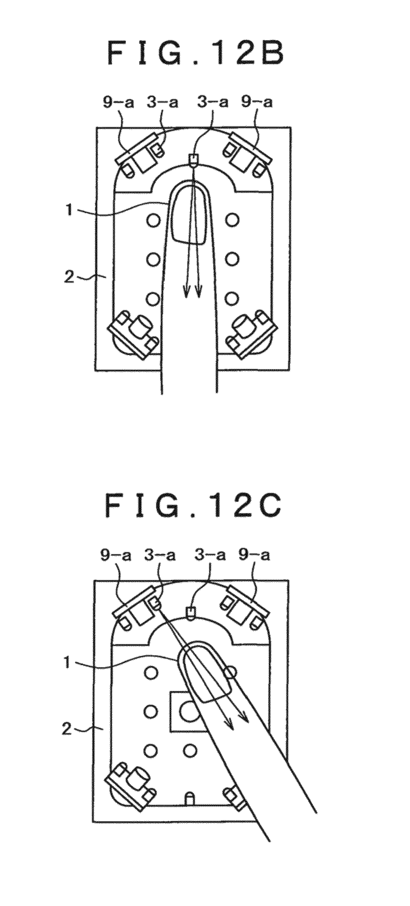

Figure 12A, Figure 12B, and Figure 12C are diagrams for explaining a third embodiment. The embodiments relate to a modification of an input device of a biological authentication system. Each of the drawings is an upper view of the input device.

In an upper part of the input device 2 in each of the drawings, the two cameras 9-a are installed on a fingertip side of the finger 1 to face the center of the device housing. One camera 9-b is installed in a central part of the device to vertically face upward, and the two cameras 9-c are also installed in a lower part of the device on the base side of the finger 1. The optical axis of each of the cameras 9-c faces the center of the device housing, and each of the cameras 9-c is installed at an angle at which the camera obliquely looks upward.

When the finger 1 is presented, when a longitudinal axis of the finger is not parallel with a straight line connecting the camera 9-a on the front side of the device and the position of the fingertip, the input device in Figure 2A described in the first embodiment cannot capture the finger from the front side because the camera 9-a near the fingertip or the lower camera 9-c near the base of finger is only one. Thus, in the third embodiment, the two cameras 9-a are installed on the front side of the fingertip, and the two lower cameras 9-c are installed on the base side of finger. In this manner, a probability that a finger image on the front side can be obtained by any one of the cameras is increased.

A method of determining a camera which captures the finger 1 at a position closest to the front side, as described above, with the biological position/shape detecting function of the authentication processing unit 10, a three-dimensional structure of the surface of the finger 1 are calculated by using the camera 9-b and the two cameras 9-c. When the positions of the cameras are known in advance, the three-dimensional structure of the surface of the finger 1 can be acquired on the basis of the three pieces of image information. When the longitudinal direction of the finger 1 is detected on the basis of the three-dimensional structure, the position of the central axis of the finger 1 can be obtained. For this reason, when a camera which is closer to the position is selected, optimum cameras can be selected from the two cameras 9-a and the two cameras 9-c.

The direction of the major axis of the finger can also be confirmed by a video image of the camera 9-b at the lower center of the device. For example, as is performed by a finger detecting process, the lower light source 3-b is blinked, and pixels the luminances of which largely change indicate the shape of a finger, and a central line obtained by linearly approximating the region is the major axis of the finger 1. It can be determined that a camera having an optical axis, the direction of which is close to the direction of the major axis, captures the front face of the finger 1.

Although two cameras are additionally installed in the embodiment, three cameras may be additionally installed. In this case, a video image closer to the video image of the front face can be selected. Only a video image of a camera directly facing the finger 1 is not used, and a front video image of the nail 62 of the finger 1 may be synthesized by stereoscopic viewing achieved by the video images of the two cameras 9-a. When a finger is straightly placed in parallel with the device housing, both the video images of the two cameras 9-a are images obtained by slightly obliquely capturing the nail 62. In contrast to this, when these video images are synthesized by using the stereoscopic technique, the video image of the finger on the front side can be reproduced. When the process is performed, the number of cameras can be reduced to make it possible to reduce the cost.

Fourth Embodiment

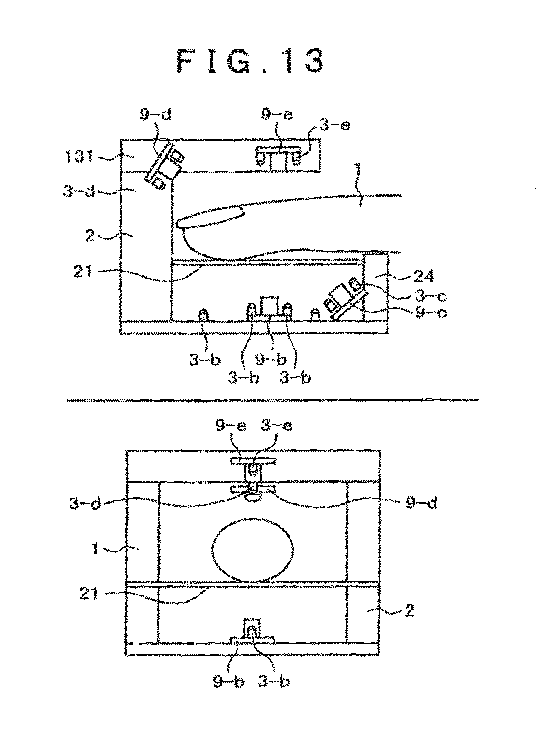

Figure 13 shows a fourth embodiment, i.e., an embodiment according to a modification of the third embodiment, and includes a sectional view of a side face of the input device 2 and a sectional view of a front face on the right of the side face. More specifically, the upper part of the drawing shows a sectional view of the side face, and the lower part shows a sectional view of a front face when viewed from a side on which a finger is inserted.

In Figure 13, a top board 131 is arranged above the finger placing plate 21, and a camera 9-d and a camera 9-e are installed therein. The camera 9-d is installed on the fingertip side above the finger 1 to capture the finger 1 on the back side of hand from the obliquely upper side. The camera 9-e is located above the finger 1 to capture the finger 1 on the back side of hand from above. A light source 3-d and a light source 3-e, like the light source 3-a in the above embodiments, are light sources that give reflected light and transmitted light to the finger 1.

In the embodiment, when a user inserts the finger 1 into a space in the device, as in the above embodiments, the authentication device detects the finger 1, structures a three-dimensional shape of the finger, and executes authentication.

In the embodiment, the top board 131 arranged above the finger 1 prevents outside light from the outside, and can capture an image directly facing the finger 1 on the back side of hand which cannot be captured in the above embodiments. A video image directly facing the finger has a capture area larger than that of a video image obliquely captured. In this manner, the device can be installed in various environments, and authentication accuracy can be more improved.

Fifth Embodiment

A fifth embodiment is an embodiment of a biological authentication system compositely utilizing a plurality of pieces of information. As information for specifying an individual, various pieces of information such as properties, knowledge, and biological information can be used. The pieces of information have various characteristics. That is, the pieces of information include information having high and low uniqueness, information being stably present, information changing with time, information which can be assigned to the other people and which cannot be assigned to the other people, and information which can be easily presented or which cannot be easily presented. The pieces of information are compositely utilized to make it possible improve the reliability of an authentication result. Furthermore, when a user need not operate the device only to perform authentication, the user can unconsciously complete the authentication process. For this purpose, information which can be externally observed, for example, clothes or glasses which are always worn, a height, a bone structure, melanin contents of skin which are external physical information, a behavior history, and the like must be automatically collected, and comprehensive determination must be performed in consideration of the uniqueness, perenniality, and the like. In this case, an authentication technique performed by various personal features is called many-modal (a new concept different from "multi-modal") authentication.

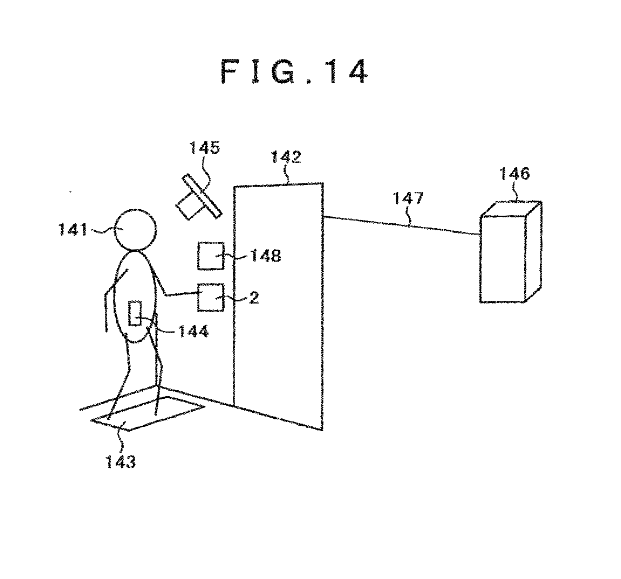

Fig. 14 is a diagram for explaining an embodiment, i.e., the fifth embodiment, of many-modal authentication which performs personal authentication by using various pieces of information.

When a user 141 gets to close to a door 142, her/his appearances are captured with a camera 145. As the appearances, a face, a height, clothes, a bone structure, a standing posture, and the like are given. Furthermore, an underfloor pressure sensor 143 measures a weight and a footprint. The ID of a mobile terminal 144 owned by the user 141 is transmitted to a radio reader 148. The camera 145 can be interlocked with a distance sensor using, for example, a laser to make it possible to obtain a three-dimensional structure of the user 141. Furthermore, a color camera is used as the camera 145 to make it possible to capture information of colors of the face and the clothes. The various pieces of information are transmitted to an authentication device 146 through a network 147.

The authentication device 146 integrates the captured pieces of information to determined whether the user is a user who is registered in advance. As a result of the determination, when it is understood that the user is a registrant, the door 141 automatically opens to allow the user to enter the room. However, when a user cannot be uniquely specified even though all pieces of information which can be captured are used, the authentication device 146 performs authentication based on an explicit authentication process.

In the embodiment, an authentication device using various feature values of finger illustrated as described above is used. When the explicit authentication operation is performed, the device designates a user to put her/his finger over the device through the display unit 15, the loudspeaker 17, or the like shown in Fig. 1. The user presents her/his finger to the input device 2. Since a degree of freedom of finger placing is high, the user performs authentication as if the user only touches the device. As a result, when the user is specified by registered data of finger, an automatic door 142 opens. When the user is rejected, the user is regarded as an unregistered person and cannot enter the room. With this system, since the presence/absence of authority of entrance can be determined even in a state in which the user does not perform an explicit operation, convenient authentication can be achieved. In addition, since the plurality of pieces of information are used, accurate authentication can be achieved. At this time, when the reliability of the authentication result is low, an explicit authentication operation is requested to make it possible to secure authentication accuracy. As described above, according to the embodiment, convenient and accurate personal authentication can be achieved.

Calculation which integrates all the modals to obtain an identical person probability of a user can be achieved by the method described in the above embodiment. Leaning performed when modals change can also be performed. In particular, information of clothes includes rough hue information and information of a locational combination of the colors of an outer ware, pants, a shirt, and the like. Although the information of clothes does not change for a short period of time, the information naturally suddenly changes due to a behavior in which the user takes off her/his outer ware. With respect to this nature, a statistical distribution can be learned within the framework of the learning described above.

With the probability integrating scheme and automatic updating of data, when the frequency of using the device increases, the probability distribution representing the tendencies of a person is gradually learned. Thus, the identity of the registrant can be more accurately determined.

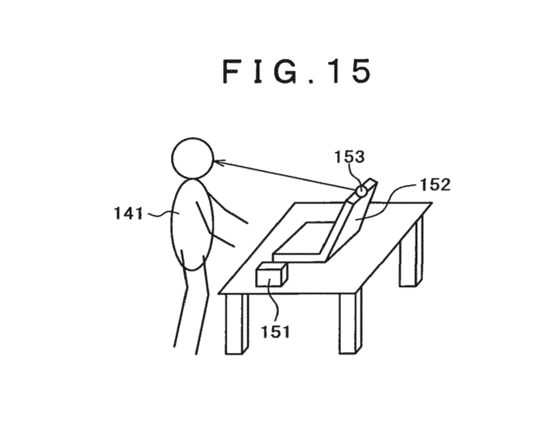

Fig. 15 is an explanatory diagram of a flow of processes performed until the user 141 logs into a PC (Personal Computer) on her/his desk when the user 141 enters the room in Figure 14.

It is assumed that a person except for the user 141 is present in the room. The person can be recognized because a person being present in the room is specified by entrance management.

On the PC 152 on her/his desk, an authentication terminal 151 which can capture only a finger vein on the palm side and a camera 153 which captures appearance are installed. The authentication terminal 151 and the camera 153 may be mounted inside the PC 152. At this time, the pressure sensor and the terminal which can capture a vein of an overall finger including the finger on the back side of hand and a fingerprint, the pressure sensor and the terminal being able to be used in the entering state in Fig. 14, are not installed. At this time, the face and clothes of the user 141 are captured with the camera 153, and authentication is performed by using the captured images. When only four persons including the user 141, Ms./Mr. B, Ms./Mr. C, and Ms./Mr. D enter the room, a specific person of the four persons, the face of which is closest to that of the user, is merely determined. Furthermore, for example, a user B logs in a PC on another desk, and, when it is determined that a face captured with a camera attached to the PC is that of the user B, it is clear that a person gets close to the PC 152 is not the user B. For this reason, a target can be narrowed down the user 141, Ms./Mr. C and Ms./Mr. D. If the color features of clothes are almost matched with colors of the user 141 who most recently entered the room and are considerably different from the colors of the clothes of Ms./Mr. C and Ms./Mr. D at present and in the past, in the probability calculating formula described above, the probability of the user 141 is maximum.

In this case, it is determined on the basis of the video image of the camera 153 that the probability of the user 141 is highest, and, when a degree of reliability exceeds a predetermined degree of reliability, a person who is close to the PC 152 is fixed as the user 141. When the user 141 gets close to the PC 152, the user 141 logs in the PC 152 with the account of the user 141. The PC 152 is automatically started with the account of the user 141 without making the user 141 conscious of a login operation, and the user 141 can enjoy high convenience. As accuracy, determination reliability is improved by integrating pieces of information as much as possible, and accurate authentication can be achieved.

If authentication is not performed by the information of the camera 153, the user inserts her/his finger into the finger vein authentication device 151 to perform authentication determination. At this time, the determination result obtained by the camera 153 is utilized. When the authentication by a finger vein is accurate higher than the authentication by the camera 153, as a result of probability calculation, a weight on an authentication result of the finger vein is heavier than a weight on the authentication by the camera 153. When the user 141 is identified with the finger vein, the user 141 can log in the PC. If the user 141 is not identified at this time, the user 141 inputs a password as a normal login operation in the PC. However, the authentication determination results obtained by the camera 153 and the finger vein authentication device 151 may be utilized. In this case, even though the user 141 slightly erroneously input the password, when the user 141 can be identified as an integral probability, the user 141 can also log in the PC. At this time, when a statistical distribution related to a frequency or a tendency of typing errors of the password is prepared, the password can be taken into the device as one modal.

In the embodiment, authentication determination can be performed even in a case that there is an environment for capturing all modals originally registered. When a user passes through an authentication system having a sensor for capturing a new modal attached thereto, the new modal is automatically learned as registration data and added. For this reason, pieces of personal modal information gradually increase without performing re-registration. When a frequency at which the user uses the system increases, the accuracy is improved, and automatic transition to an authentication system of another modal becomes possible.

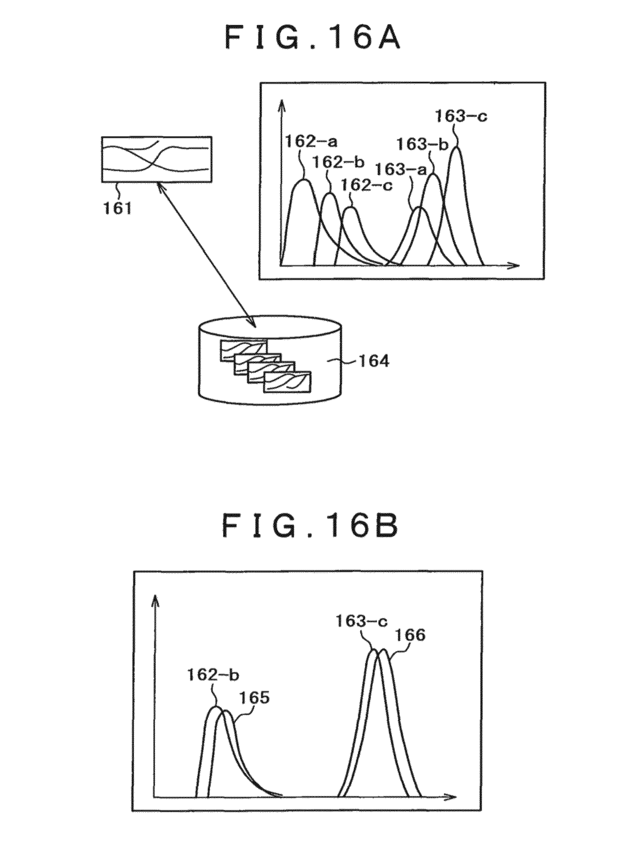

Fig. 16A and Fig. 16B are diagrams for explaining a concrete example of a determining method based on estimation of a statistical distribution in each of the embodiments described above.

As registered data serving as first feature data for each modal in personal authentication, in general, feature values of the modal and various pieces of accompanying information such as the identification ID of the registrant and management information are registered. Of the pieces of information, as information used in the probability calculation in the above embodiments, a likelihood distribution for the feature values of the modal may be stored.

As a storing mode of the likelihood distribution, pairs of checking values and appearance frequencies may be stored as a table, and, in order to prevent the table from being increased in volume, approximation to a commonly known statistical distribution. For example, a normal distribution, a log-normal distribution, a binominal distribution, a beta distribution, Student's t-distribution, and the like are used. When several parameters are given to these distributions, an appearance frequency corresponding to a checking value can be obtained. For example, in the normal distribution, when two parameters, i.e., an average and a variance are determined, an appearance frequency corresponding to a certain checking value can be obtained. The advantage of the approximation to the statistical distribution is that, since an appearance frequency can be obtained by only giving several parameters, a required storage capacity is smaller than that required when a table to hold all appearance frequencies is secured.

However, in order to hold a small number of statistical parameters, for example, when one parameter is held by an 8-bit floating point number, a 16-byte storage capacity is required to store two parameters, i.e., an average and a variance in a normal distribution. In order to store an identical person distribution and an other people distribution, a 32-byte storage capacity that is twice the 16-byte storage capacity is required. When a registration data amount has an upper limit, for example, when data is stored in an IC card or when a registered data format which has been defined is difficult to be changed, 32-byte information may not be able to be added.

Thus, typical distributions are prepared for each modal, a specific typical distribution to which the feature value of the registered data approximates is estimated, and only the number of the distribution is held to make it possible to solve the problem. A concrete example of this method will be described below.

Capturing and checking of modals for a large number of examinees are performed in advance, and identical person distributions and other people distributions of individuals to be observed are investigated in advance. Ranges of fluctuations of the identical person distributions and the other people distributions are evaluated. For example, when attention is paid to the identical person distributions, the averages and the variances of the identical person distributions fluctuate depending on the examinees, and the ranges of the fluctuations are examined in advance. Several typical distributions are determined on the basis of the ranges of the fluctuations and defined as typical distributions. It is assumed that the averages in normal distributions fluctuate in the range of 0.1 to 0.3, and the variances fluctuate in the range of 0.01 to 0.02. In contrast to this, when the averages of distributions have three values, i.e., 0.1, 0.2, and 0.3 and the variances have two values, i.e., 0.01 and 0.02, and six distributions obtained by combining the distributions having the averages and the variances are defined as the typical distributions. Fig. 16A shows identical person distributions 162-a, 162-b, and 162-c and other people distributions 163-a, 163-b, and 163-c as typical distributions related to a finger vein. This means that a plurality of probabilities of appearance of feature values of a biological object are held as first feature data.

In execution of registration of a specific user, a statistical distribution to which a behavior of the modal of the user approximates is estimated. For example, when a finger vein data 161 of the user is obtained, checking processing is actually performed to registered data 164 of the finger vein of another registrant to measure a checking value to be observed. When the number of other registrants is large, a large number of checking values which can be actually measured can be obtained. For this reason, the appearance frequencies of the checking values can be more accurately obtained. However, when the number of other registrants is small, in other registered data and her/his own data, while various changes such as image noise and deformation are given to captured modal information at random, actual measurement may be repeated. In particular, when an identical person distribution is estimated, since a large number of images cannot be easily obtained, changes given to one captured image are advantageous. As ways of giving the changes, camera noise is given as random numbers to a modal which can be captured with a camera, deformation unique to a modal, for example, misalignment of a rotating angle of a finger or a partial defect is pseudoly given to, for example, an image of a finger vein. In this manner, the number of checking values to be actually measured can be increased.

Fig. 16B shows a frequency distribution of an input biological object and a most approximate typical distribution.

For a large number of checking values obtained as described above, the most approximate distribution of the typical distributions obtained in advance is determined. More specifically, on the basis of a statistical method such as maximum likelihood estimation, a specific typical distribution to which the checking value obtained by actual measurement approximates is evaluated. In checking with data of other people, the other people distribution is estimated, and, in checking with data of identical persons, the identical person distribution is estimated. In this case, an identical person distribution estimation result 165 and an other people estimation result 166 for the finger vein data 161 are obtained. In the embodiment, the most approximate typical distributions are the identical person distribution 162-b and the other people distribution 163-c.

Finally, the numbers of the selected typical distributions are given to registered data. Since the size of the data to be given can fall within a bit rate which can express the number of typical distributions at most, a required data size is smaller than that required when the parameters of statistical distributions are held. In the embodiment, since the total number of typical distributions is six, both the identical person distributions and the other people distributions can be expressed by 3 bits. When checking processing is performed with a finger vein of the registrant, a checking value obtained at this time is considered to appear at a frequency close to an appearance frequency of the given typical distribution. In this manner, the appearance frequency distribution can be used in the probability calculation described above, an identical person probability can be estimated at accuracy higher than that obtained when an appearance frequency distribution is not known in advance.

Thus, according to the present invention, while information added as registered data is minimized, information approximate to a probability distribution in a modal of the registrant can be referred to, and high accuracy can be achieved.

The present invention is not limited to the embodiment described above, and includes various modifications. For example, the embodiments have been described in detail to clearly understand the present invention, and are not always limited to one including all the described configurations.

Some configurations of a certain embodiment can be replaced with configurations of another embodiment. Furthermore, configurations of another embodiment can be added to configurations of a certain embodiment. With respect to some configurations of each of the embodiments, other configurations can be added, deleted, and replaced.

In addition, the configurations, the functions, the processing units, and the like described above can be achieved with software by creating a program that achieves some or all of the configurations, the functions, the processing units, and the like. However, the configurations, the functions, the processing units, and the like may be achieved by, in place of the program achieved by the CPU, hardware obtained by design or the like performed by, for example, an integrated circuit.

Industrial Applicability

The present invention can achieve a convenient biological authentication device with high accuracy, and is useful as a personal authentication device and a personal authentication method.

Reference Signs List

| | |
|---|---|
| 1 | finger |
| 2 | input device |
| 3 | light source |
| 9, 145, 153 | camera (image capture device) |
| 10 | authentication processing unit |
| 11 | CPU |
| 12 | memory |
| 13 | interface (IF) |
| 14 | storage device |
| 15 | display unit |
| 16 | input unit |
| 17 | loudspeaker |
| 18 | image input unit |
| 21 | finger placing plate |
| 22 | guide light source |
| 23 | camera setting table |
| 24 | housing finger-insertion-side structure |
| 31 | reflected image |

| 32 | interested point |
| 51 | three-dimensional structure |
| 61 | image |
| 62 | nail |
| 63 | finger vein on back side of hand |
| 64 | joint wrinkles |
| 71, 72 | nail image |
| 73 | finger region |
| 74 | major direction |
| 75 | nail region |
| 97 | finger vein on palm side |
| 101 | fake nail |
| 81, 83, 85, 87, 89, 91, 93, 95, 102, 162 | identical person distribution of appearance frequency |
| 82, 84, 86, 88, 90, 92, 94, 96, 163 | other people distribution of appearance frequency |
| 111 | fingerprint |
| 131 | top board |
| 141 | user |
| 142 | door |
| 143 | pressure sensor |
| 144 | mobile terminal |
| 146, 151 | authentication device |
| 147 | network |
| 148 | radio reader |
| 152 | PC |
| 161 | finger authentication data |
| 164 | registered data |
| 165, 166 | estimation result |

## Claims

1. An authentication apparatus that authenticates an individual by using features of a biological object, comprising:

> an input device to place a biological object thereon;
> a plurality of image capture devices to capture the biological object;
> an image processing unit that processes images captured by the plurality of image capture devices; and
> a plurality of light sources to capture the biological object, wherein
> the image processing unit includes:

>> a checking processing unit that checks first feature data registered in advance with second feature data extracted from the images captured by the image capture devices and representing the features of the biological object; and
>> a biological position/shape detection unit that detects a position/shape of the biological object by using the images captured by the plurality of image capture devices,
>> on the basis of the position/shape of the biological object detected by the biological position/shape detection unit, on/off states of the plurality of light sources or capturing by the plurality of image capture devices are controlled to switch feature values of the biological object used in authentication depending on the position/shape of the biological object.

2. The authentication device according to claim 1, wherein
the image processing unit
extracts a first feature of the biological object from an image captured by a first image capture device of the plurality of image capture devices and extracts a second feature of the biological object from an image captured by a second image capture device of the plurality of image capture devices, and
determines quality of the second feature on the basis of the extracted first feature.

3. The authentication device according to claim 2, wherein
the biological position/shape detection unit acquires a spatial positional relationship between the first feature and the second feature,
the checking processing unit
uses the spatial positional relationship between the first feature and the second feature to perform checking.

4.  The authentication device according to claim 1, wherein
the biological object is a finger, and
the biological position/shape detection unit detects a three-dimensional shape of a surface of the finger and determines flexure of a joint of the finger on the basis of the detected three-dimensional shape.

5.  The authentication device according to claim 1, wherein
the image processing unit
detects a plurality of feature values of the biological object in the plurality of image capture devices as the second feature data, and
the checking processing unit
calculates a probability that the plurality of feature values appear and performs the checking on the basis of the probability.

6.  The authentication device according to claim 5, wherein
the image processing unit
updates a first feature value of the plurality of feature values on the basis of a checking result calculated by the other feature values and the detected first feature value.

7.  The authentication device according to claim 1, wherein
the biological object is a finger,
the plurality of authentication devices are arranged in a line in a longitudinal direction of the finger placed on the input device.

8.  The authentication device according to claim 7, wherein
extended lines of optical axes of the plurality of image capture devices cross each other at the same point.

9.  The authentication device according to claim 1, wherein
the plurality of light sources are arranged in a front part, a lower part, and a side part of the input device on which the biological object is placed.

10. The authentication device according to claim 1, wherein
the image processing unit
holds a plurality of probabilities that the feature values of the biological object appear as the first feature data and checks one of the feature values with the second feature data.

11. An authentication method that authenticates an individual by an image processing unit using features of a biological object, wherein
by using images obtained by capturing the biological object placed on an input device with a plurality of light sources and a plurality of image capture devices, position/shape of the placed biological object are detected, first feature data registered in advance is checked with second feature data extracted from the images and representing the features of the biological object to perform authentication, and
the features of the biological object used in the authentication are switched depending on the detected position/shape of the biological object.

12. The authentication method according to claim 11, wherein
a first feature of the biological object is extracted from an image captured by a first image capture device of the plurality of image capture devices, a second feature of the biological object is extracted from an image captured by a second image capture device of the plurality of image capture devices, and quality of the second feature is determined on the basis of the extracted first feature.

13. The authentication method according to claim 11, wherein
the biological object is a finger, and
a three-dimensional shape of a surface of the finger is detected, and flexure of a joint of the finger is determined on the basis of the detected three-dimensional shape.

**14.** The authentication method according to claim 11, wherein

a plurality of feature values of the biological object are detected as the second feature data from the plurality of image capture devices, and

probabilities that the plurality of feature values appear are calculated, and the checking is performed on the basis of the probabilities.

**15.** The authentication method according to claim 14, wherein

a probability of a first feature value of the plurality of feature values is updated on the basis of a checking result calculated from the other feature values and the detected first feature value.

# F I G . 1

# FIG.2A

3-a
22
9-a
23
2
1
21
24
9-a
3-a
23
9-c
3-c
21
3-b
3-b
9-b
3-b
3-b

# FIG.2B

3-a
9-a
23
2
1
21
24
3-c
9-c
3-b
3-b
9-b
3-b

EP 2 892 026 A1

# FIG.3A

# FIG.3B

# F I G . 4

START

S301 — ILLUMINATE A FINGER WITH AN INFRARED LIGHT SOURCE 3-b IN A BLINKING MANNER, AND PHOTOGRAPH FINGER IMAGE WITH CAMERAS 9-b AND 9-c

S302 — IS VARIATION IN LUMINANCE LARGE?  N

Y

S303 — ILLUMINATE A FINGER WITH AN INFRARED LIGHT SOURCE 3-b, AND PHOTOGRAPH FINGER IMAGE WITH CAMERAS 9-b AND 9-c

S304 — DETECT THREE-DIMENSIONAL STRUCTURE OF FINGER, AND DETERMINE POSTURE OF FINGER

S305 — SELECT OPTIMUM LIGHT SOURCE, AND PHOTOGRAPH TRANSMITTED · REFLECTED IMAGE OF FINGER

S306 — EXTRACT CHARACTERISTIC OF EACH MODAL

S307 — COLLATE REGISTERED PATTERN

S308 — IS MODAL MATCHED WITH REGISTERED PATTERN?  N   S310

Y

S309 — AUTHENTICATION IS SUCCESSFUL

S310 AUTHENTICATION IS FAILED

S311 — IS THERE MODAL HAVING LOW MATCHING RATE?  N

END

Y

S312 — LEARNING PROCESS

END

25

# FIG.5A

# FIG.5B

# FIG.5C

# F I G . 6 A

# F I G . 6 B

# F I G . 6 C

27

# F I G . 7

EP 2 892 026 A1

# FIG.8A

81  82    83  84    85  86    87  88

# FIG.8B

89  90    91  92    93  94    95  96

F I G . 9

# FIG.10

95   96

102

62

1

1

62

# FIG.11A

# FIG.11B

# F I G . 1 2 A

# FIG.12B

# FIG.12C

# FIG.13

# FIG.14

# FIG.15

# FIG.16A

# FIG.16B

## INTERNATIONAL SEARCH REPORT

International application No.

PCT/JP2012/071724

A.   CLASSIFICATION OF SUBJECT MATTER
*G06T7/00*(2006.01)i, *G06T1/00*(2006.01)i

According to International Patent Classification (IPC) or to both national classification and IPC

B.   FIELDS SEARCHED

Minimum documentation searched (classification system followed by classification symbols)
G06T7/00, G06T1/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2009-178300 A  (Oki Electric Industry Co.,<br>Ltd.),<br>13 August 2009 (13.08.2009),<br>paragraphs [0008] to [0027]<br>(Family: none) | 1-4,9,11-13<br>5,7,8,10,14<br>6,15 |
| Y | WO 2010/044250 A1  (NEC Corp.),<br>22 April 2010 (22.04.2010),<br>paragraphs [0034] to [0085]<br>(Family: none) | 5,10,14 |
| Y | JP 2007-75305 A  (Hitachi, Ltd.),<br>29 March 2007 (29.03.2007),<br>paragraph [0054]; fig. 19<br>& US 2007/0058841 A1     & EP 1764724 A2<br>& CN 1932845 A | 7,8 |

☒   Further documents are listed in the continuation of Box C.          ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    15 October, 2012 (15.10.12) | Date of mailing of the international search report<br>    23 October, 2012 (23.10.12) |
|---|---|
| Name and mailing address of the ISA/<br>    Japanese Patent Office | Authorized officer |
| Facsimile No. | Telephone No. |

Form PCT/ISA/210 (second sheet) (July 2009)

**EP 2 892 026 A1**

**INTERNATIONAL SEARCH REPORT**

| International application No. |
| --- |
| PCT/JP2012/071724 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-219 A  (Hitachi, Ltd.),<br>11 January 2007 (11.01.2007),<br>paragraphs [0012] to [0020]<br>(Family: none) | 1-15 |

Form PCT/ISA/210 (continuation of second sheet) (July 2009)

40

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011194245 A
- JP 2008198083 A
- JP 2004255212 A